# EUROPÄISCHE PATENTSCHRIFT

(11) **EP 1 232 809 B1**
(45) Veröffentlichungstag und Bekanntmachung des Hinweises auf die Patenterteilung: **01.08.2007**
(21) Anmeldenummer: 02003381.7
(22) Anmeldetag: 14.02.2002
(51) Int. Cl.: B21C 35/02, B29C 47/34

(54) **Strangpressanlage mit wenigstens einer Ausziehvorrichtung**
Extruder with at least one extraction device
Extrudeuse avec au moins un appareil d'extraction

(30) Priorität: 16.02.2001 DE 10107891
(43) Veröffentlichungstag der Anmeldung: 21.08.2002
(73) Patentinhaber: SMS EUMUCO GmbH, 51377 Leverkusen (DE)
(72) Erfinder: Keller, Christof, Dipl.-Ing, 78234 Engen-Welschingen (DE); Lechtaler, Andreas, 6710 Nenzingen (AT)
(74) Vertreter: Grosse, Wolf-Dietrich Rüdiger

(56) Entgegenhaltungen:
- EP-A- 0 646 426
- DE-A- 4 019 974
- GB-A- 2 174 516
- US-A- 3 587 280
- US-A- 4 790 167

## Beschreibung

Die Erfindung betrifft eine Strangpressanlage mit wenigstens einer Ausziehvorrichtung, insbesondere Puller zum Ausziehen von gepressten Strangpressprofilen entlang einer Transporteinrichtung, wobei wenigstens eine Kühleinrichtung zum Kühlen des Strangprofils oberhalb der Transporteinrichtung angeordnet ist.

Derartige Strangpressanlagen sind in vielfältiger Form und Ausführung auf dem Markt bekannt und gebräuchlich. Sie dienen insbesondere dazu, ein Strangpressprofil, welches durch Strangpressen bzw. durch ein Umformverfahren aus einer Presse, insbesondere aus einer Düse gepresst wird aufzunehmen, zu strecken und auf einer Transporteinrichtung abzulegen.

Durch das Mitführen mittels einer Ausziehvorrichtung, genannt Puller, soll der Strang bzw. das Profil, der Stab, die Stange oder das Rohr gestreckt und in der Form gehalten werden.

Durch das Umformverfahren beim Strangpressen wird das Strangpressprofil stark erwärmt, beispielsweise auf eine Austrittstemperatur aus der Presse von etwa 500 bis 520°C.

Um dieses Strangpressprofil zu vergüten, wird dieses beispielsweise mittels einer Kühleinrichtung gekühlt, wobei die Kühleinrichtung die Transporteinrichtung vollständig umgibt. Dies ist äußerst kostenaufwendig, wobei insbesondere der Kühlprozess schwer zu steuern und zu regeln ist.

In diesen Kühleinrichtungen erfolgt ein meist zu schnelles und unkontrolliertes Abkühlen des Strangpressprofils, was Deformationen unterschiedliche inhomogene Materialeigenschaften zur Folge hat, was unerwünscht ist.

Da die Kühlung zur Vergütung des Strangpressprofils, insbesondere zur Erhöhung der Festigkeit dient, sind Strangpressanlagen mit entsprechenden Kühleinrichtungen gefordert, die diesen Ansprüchen Rechnung tragen.

Für eine Strangpressanlage der eingangs genannten Art ist es daher durch die US-A-3.587.280 bekannt geworden, oberhalb der Transporteinrichtung bzw. des Auslaufförderers für das Strangpressprofil eine Kühleinrichtung vorzusehen, wobei die Kühleinrichtung oberhalb der nahezu über die gesamte Breite der Transporteinrichtung reichenden Auszieheinrichtung angeordnet ist.

Der Erfindung liegt daher die Aufgabe zugrunde, eine Strangpressanlage der eingangs genannten Art zu schaffen, welche die genannten Nachteile beseitigt und mit welcher auf einfache und kostengünstige, effektive Weise eine Kühlung eines Strangpressprofils, unmittelbar nach dem Strangpressen optimiert wird. Dabei soll ein exakter Einfluss auf Materialeigenschaften des Strangpressprofils, auf eine konstante Abkühlgeschwindigkeit in einer ganz bestimmten Zeit genommen werden können. Zudem soll eine derartige Strangpressanlage sehr kostengünstig herzustellen und effektiv zu betreiben sein.

Diese Aufgabe wird erfindungsgemäß mit den im kennzeichnenden Teil des unabhängigen Anspruchs angegebenen Merkmalen gelöst. Diese ermöglichen, daß sich bei neben der Transporteinrichtung an Führungssystemen verfahrbar gelagerten Ausziehvorrichtungen mit ihren Einspanneinrichtungen zwischen den Ausziehvorrichtungen die Kühleinrichtung anordnen lässt.

Um die Kühleinrichtung möglichst nahe über der Transporteinrichtung vorzusehen, hat es sich als vorteilhaft erwiesen, einen Überholvorgang zweier Ausziehvorrichtungen bzw. Einspanneinrichtungen zu gewährleisten. Hierzu dienen entsprechende Ausnehmungen bzw. Überhollücken in einer Unterseite eines Gehäuses der zumindest einen Kühleinrichtung.

Auch soll daran gedacht sein, eine Mehrzahl von Kühleinrichtungen beabstandet zueinander entlang der Transporteinrichtung anzuordnen, um die entsprechenden Ausnehmungen bzw. Überhollücken zu bilden.

Auf diese Weise lässt sich im Bereich der Überhollücken ein Überholvorgang der Einspanneinrichtungen bzw. der Ausziehvorrichtungen realisieren, was zum beschleunigten hin und her Bewegen bzw. Aufnehmen von neuen Strangpressprofilen dient.

Insbesondere der reduzierte Abstand zwischen Kühleinrichtung und Strangpressprofil bzw. Transporteinrichtung bewirkt, dass eine Kühlung durch das austretende Gas bzw. die austretende gekühlte Luft unmittelbar und effektiv das zu kühlende Stangpressprofil umströmt und auf diese Weise eine homogene Vergütung des Strangpressprofiles möglich ist. Dabei kann homogen über die vollständige Länge eine homogene Erhöhung der Festigkeit durch diesen regelbaren und optimierten Abkühlprozess erreicht werden.

Dabei lässt sich sehr genau und kontinuierlich die Abkühlgeschwindigkeit steuern bzw. eine konstante Abkühlgeschwindigkeit des Strangpressprofiles einstellen, da die Kühleinrichtungen nahe dem Strangpressprofil zugeordnet sind.

Gleichzeitig kann bspw. seitlich, durch entsprechende Optiken oder Augenscheinnahme, der Abkühlprozess des Strangpressprofieles kontrolliert und beobachtet werden. Auch ein Einstellen bzw. justieren des Abkühlprozesses bzw. der Ausblasgeschwindigkeit, Ausblastemperatur, des Kühlmediums aus der Kühleinrichtung lässt sich durch diese intensive Luftkühlung nahe des Strangpressprofils kontrollieren, beobachten und beeinflussen bzw. regeln.

Auch soll im Rahmen der vorliegenden Erfindung liegen, bspw. unter die Walzen der Transporteinrichtung ein Prallblech vorzusehen, damit ggf. die Kühlluft zwischen den Strangpressprofilen durchströmt und von unten diese kühlt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf einen Teil einer Strangpressanlage in einer Ruhelage;
Figur 2 eine schematisch dargestellte Seitenansicht auf eine Strangpressanlage als weiteres Ausführungsbeispiel gemäss Figur 1;
Figur 3 eine schematisch dargestellte Seitenansicht eines weiteren Ausführungsbeispieles einer Strangpressanlage gemäss Figur 2;
Figur 4 eine schematisch dargestellte Seitenansicht einer noch weiteren Strangpressanlage gemäss den Figuren 2 und 3;
Figur 5 eine schematisch dargestellte Draufsicht einer Strangpressanlage in einer Gebrauchslage.

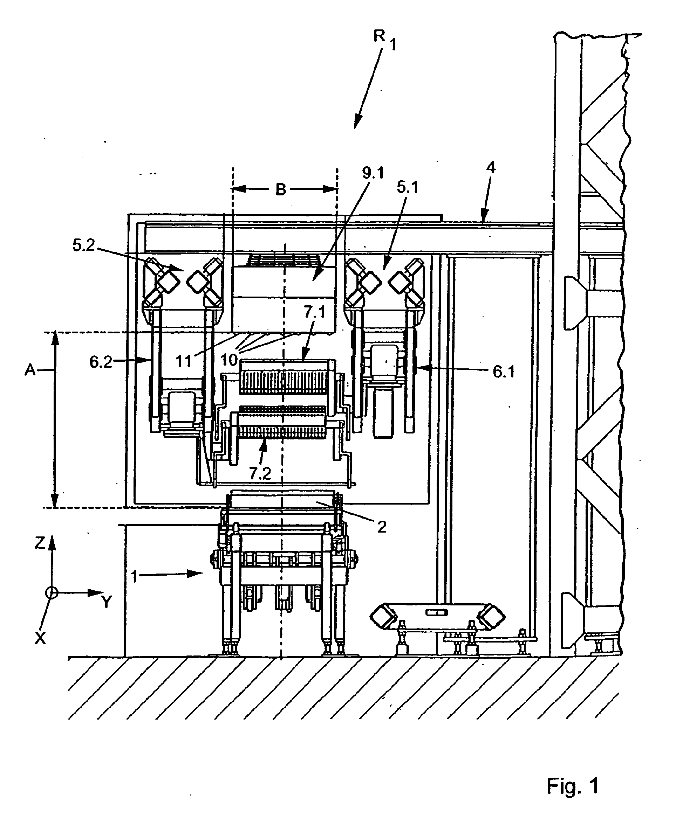

Gemäss Figur 1 weist eine erfindungsgemässe Strangpressanlage R₁ eine Transporteinrichtung 1 auf, welche mit einer Vielzahl von passiv mitlaufenden oder aktiv angetriebenen Walzen 2 versehen ist, die ggf. wie hier nicht näher dargestellt, absenkbar ausgebildet sind.

Die Transporteinrichtung 1 schliesst unmittelbar, wie es bspw. in einer Strangpressanlage R₂ schematisch dargestellt ist, an eine Presse 3 an.

Dabei übergreift ein Gestell 4 die Transporteinrichtung 1, an welchem im bevorzugten Ausführungsbeispiel über Führungssysteme 5.1, 5.2 zwei Ausziehvorrichtungen 6.1, 6.2 linear entlang einer X-Richtung hin und her bewegbar bzw. verfahrbar sind. Die Ausziehvorrichtung 6.1, 6.2, insbesondere Puller genannt, ist jeweils mit einer Einspannvorrichtung 7.1, 7.2 versehen, die über der Transporteinrichtung 1 angeordnet ist.

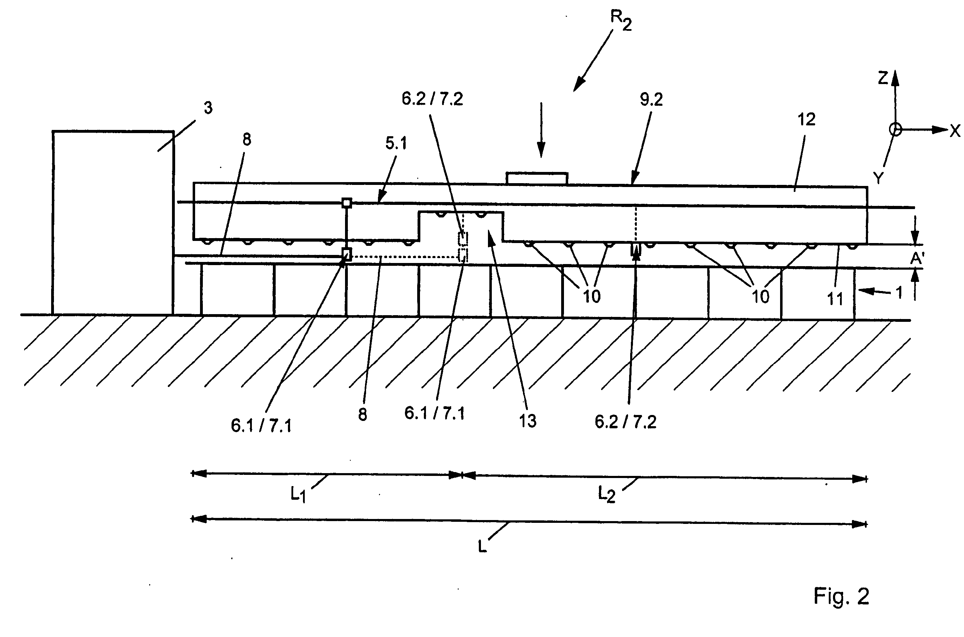

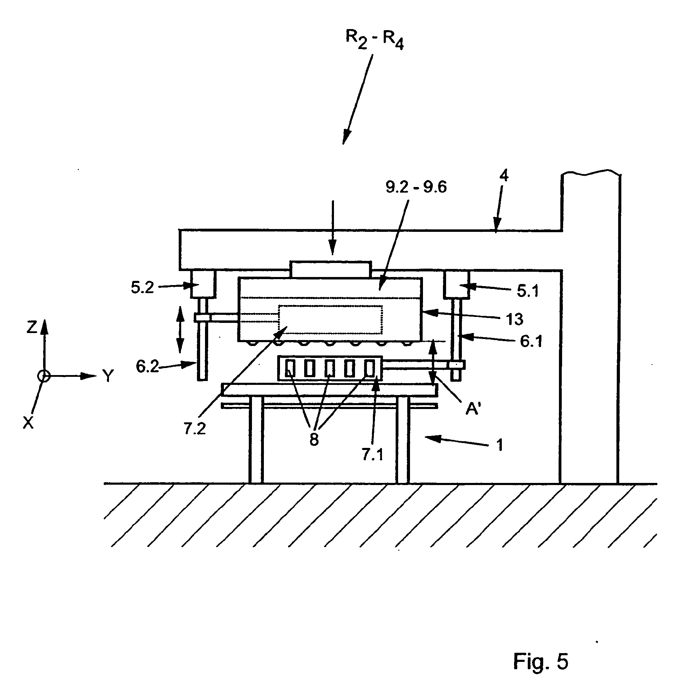

Die Einspanneinrichtung 7.1, 7.2 dient zum Aufnehmen und Einspannen eines unmittelbar aus der Presse 3 austretenden bzw. ausgepressten Strangpressprofiles 8, wie es bspw. schematisch in Figur 2 sowie in Figur 5, dargestellt ist.

Die Ausziehvorrichtung 6.1 oder 6.2 ergreift ein unmittelbar aus der Presse 3 austretendes Strangpressprofil 8 mit seiner Einspanneinrichtung 7.1 oder 7.2.

Während des Auspressvorganges aus der Presse 3 wird das Strangpressprofil 8 über die Transporteinrichtung 1 gestreckt bzw. bewegt.

Dabei ist bei der vorliegenden Erfindung besonders vorteilhaft, dass zumindest eine Kühleinrichtung 9.1 vorzugsweise oberhalb der Transporteinrichtung 1 angeordnet ist.

Dabei ist vorzugsweise die Transporteinrichtung 9.1 in etwa mittig über der Transporteinrichtung 1 und nahe dieser angeordnet. Die Führungssysteme 5.1, bzw. 5.2 sind jeweils seitlich ebenfalls am Gestell 4 neben der Kühleinrichtung 9. 1 angeordnet.

Die Kühleinrichtung 9.1 weist eine Mehrzahl von hier angedeuteten Düsenelementen 10 auf, die zum Ausbringen von bspw. kalter Luft oder kaltem Gas dienen. Vorzugsweise sind die Düsenelemente 10 über die vollständige Länge und die vollständige Breite an der Unterseite 11 der Kühleinrichtung 9.1 angeordnet. Die Kühleinrichtung 9.1 wird über Lufzufuhreinrichtungen 15 mit halber Luft versorgt.

Durch die Anordnung der Führungssysteme 5.1, 5.2 für die Ausziehvorrichtungen 6.1, 6.2 neben der Transporteinrichtung 1, lässt sich dazwischen die Kühleinrichtung 9.1 anordnen bzw. am Gestell 4 anordnen. Auf diese Weise ist ein Abstand A zwischen der Unterseite 11 der Kühleinrichtung 9.1 zu den Walzen 2 der Transporteinrichtung 1 im Vergleich zu herkömmlichen Systemen erheblich reduziert.

Auf diese Weise lässt sich äusserst wirkungsvoll und effektiv kalte Luft oder gekühltes Gas zum Kühlen der Strangpressprofile 8 ausbringen. Hierdurch lässt sich exakt das Stranpressprofil 8, welches in etwa eine Austrittstemperatur von 500 bis 520 C° besitzt auf eine Temperatur unter 200 C° innerhalb von 120 Sekunden abkühlen.

Dabei lässt sich eine konstante Abkühlgeschwindigkeit realisieren, um das Strangpressprofil 8 bspw. auf 60 C° abzukühlen. Hierdurch lassen sich insbesondere die Materialeigenschaften des gepressten Strangpressprofiles 8 beeinflussen.

Zudem wird durch diese Anordnung gewährleistet, dass bspw. seitlich das Strangpressprofil 8 sichtbar und während des vollständigen Ausziehens aus der Presse 3 zugänglich ist.

Im bevorzugten Ausführungsbeispiel sind zwei Ausziehvorrichtungen 6.1, 6.2 mit entsprechenden Einspanneinrichtungen 7.1, 7.2 angeordnet, die sich innerhalb des Abstandes A zwischen Kühleinrichtung 9.1 und Transporteinrichtung 1 überholen können. Dabei lässt bspw. die Einspanneinrichtung 7.1 über die Einspanneinrichtung 7.2 verfahren, wenn sich diese bspw. überholen.

Ferner hat sich als vorteilhaft erwiesen, wie es insbesondere in Figur 2 hervorgeht, in ein Gehäuse 12 der Kühleinrichtung 9.2, insbesondere in dessen Unterseite 1 zumindest eine Ausnehmung 13 vorzusehen, die als Überhollücke 14 ausgebildet ist.

Auf diese Weise lässt sich ein Abstand A' gegenüber dem Ausführungsbeispiel gemäss Figur 1 noch weiter reduzieren. Bei der Strangpressanlage R₁, wie sie in Figur 2 dargestellt ist, kann lediglich eine Ausziehvorrichtung 6.1, bzw. 6.2 in dargestellter X-Richtung hin und her verfahren werden, diese können sich lediglich im Bereich der Ausnehmung 13 bzw. in der Überhollücke 14, wie es gestrichelt angedeutet ist, überholen. In der Überhollücke 14 sind ebenfalls Düsenelemente 10 vorgesehen.

Ist bspw. die Ausziehvorrichtung 6.1 im Bereich der Ausnehmung 13, so lässt sich die Ausziehvorrichtung 6.2 ebenfalls in die Ausnehmung 13 in Z-Richtung verfahren und überholt auf diese Weise die Ausziehvorrichtung 6.1.

Wird dann die Ausziehvorrichtung 6.1 weiter in X-Richtung mit Strangpressprofil 8 verfahren kann inzwischen die Ausziehvorrichtung 6.2 zur Presse 3 verfahren werden, um bspw. das nächste Strangpressprofil 8 aufzunehmen.

Es hat sich ferner als vorteilhaft erwiesen die Ausnehmung 13 in einer Länge L₁ von der Presse 3 anzuordnen, die in etwa einen Drittel der Gesamtlänge L der Kühleinrichtung 9.2 entspricht. Der verbleibende Teil der Kühleinrichtung 9.2 entspricht einer Länge L₂, die in etwa zwei Drittel der Gesamtlänge L entspricht.

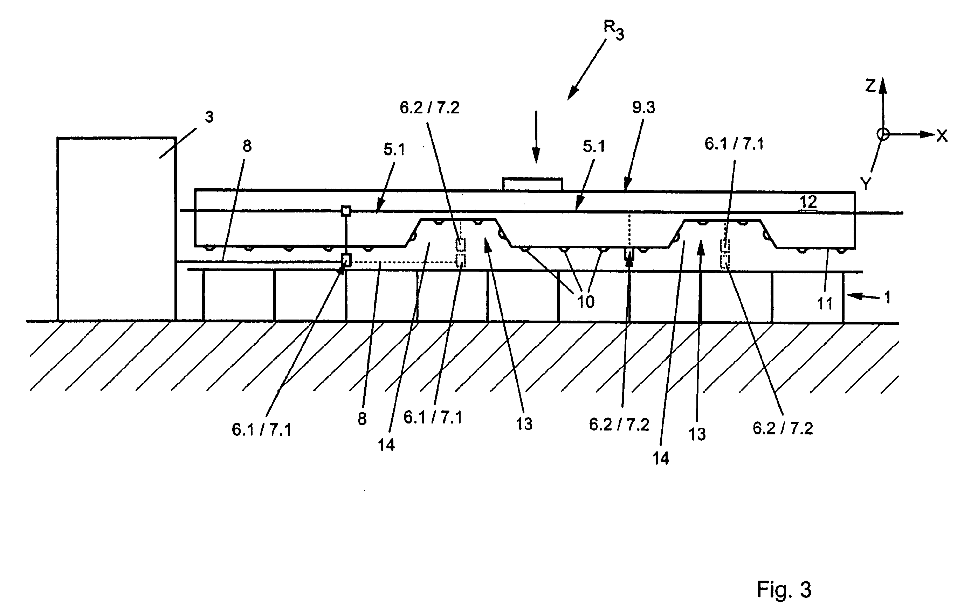

In dem Ausführungsbeispiel der vorliegenden Erfindung gemäss Figur 3 ist eine Strangpressanlage R₃ aufgezeigt, welche in etwa der Strangpressanlage R₂ gemäss Figur 2 entspricht. Unterschiedlich ist, dass eine Mehrzahl von Ausnehmungen 13 bzw. Überhollücken 14 in der Unterseite 11 im Gehäuse 12 der Kühleinrichtung 9.3 vorgesehen sind. Auf diese Weise können unterschiedliche Überholvorgänge der Ausziehvorrichtungen 6.1, 6.2 bzw. deren Einspanneinrichtungen 7.1, 7.2 gesteuert bzw. beeinflusst werden. Dabei kann die Form der Ausnehmung 13 rechteckartig oder gewölbt über eine vollständige Breite B der Kühleinrichtung 9.3 ausgebildet sein.

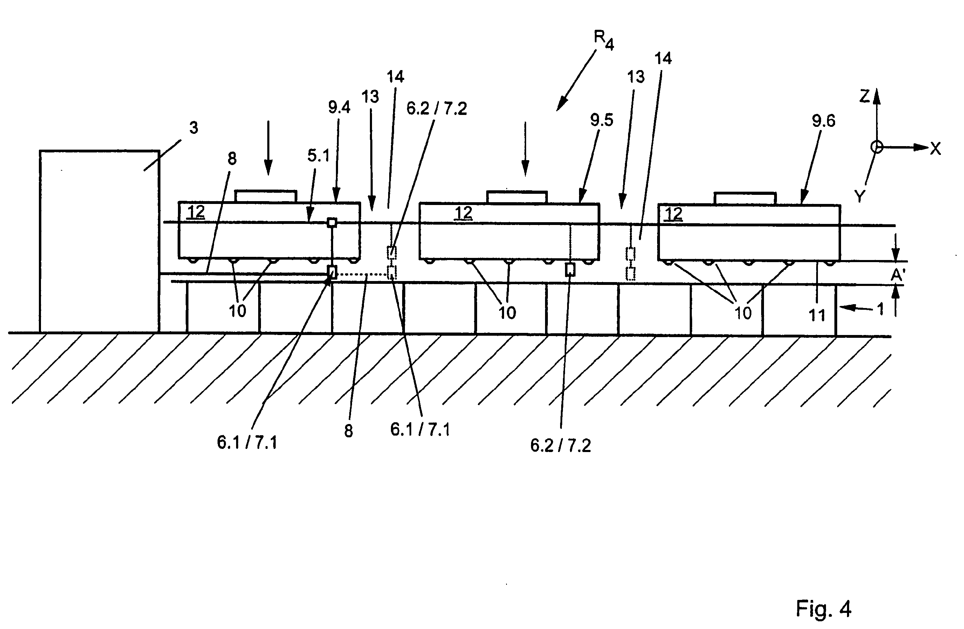

Eine ähnliche Strangpressanlage R₄ ist in Figur 4 dargestellt, wobei eine Mehrzahl von Kühleinrichtungen 9.4 bis 9.6 hintereinander entlang der Transporteinrichtung 1 in oben beschriebener Weise angeordnet sind. Dabei sind die einzelnen Kühleinrichtungen 9.4 bis 9.6 jeweils zueinander stirnseitig beabstandet, so dass jeweils zwischen stirnseitig benachbarten Kühleinrichtungen die Ausnehmung 13 bzw. über Überhollücke 14 gebildet wird. In diesem Bereich kann in oben beschriebener Weise der Überholvorgang der Ausziehvorrichtungen 6.1, 6.2 bzw. deren Spanneinrichtungen 7.1, 7.2 erfolgen. Hierdurch wird wieder ein Abstand A' zwischen Kühleinrichtungen 9.4 bis 9.6 zur Transporteinrichtung 1 erheblich reduziert.

In dem Ausführungsbeispiel der vorliegenden Erfindung gemäss Figur 5 ist dargestellt, wie bspw. die Einspanneinrichtung 7.1 die Strangpressprofile 8 einspannt bzw. aufnimmt, welche entlang des Führungssystemes 5.1, 5.2 in X-Richtung verfahren wird. Dabei ist jede Einspanneinrichtung 7.1, 7.2 in dargestellter Z-Richtung entlang der Ausziehvorrichtung 6.1, 6.2 verfahrbar.

Insbesondere für den Überholvorgang bzw. Überholprozess lässt sich, wie es gestrichelt dargestellt ist, die Einspanneinrichtung 7.2 in die Ausnehmung 13 einfahren, bis die Einspanneinrichtung 7.2 die Ausnehmung 13 überquert hat.

Anschliessend lässt sich die Ausziehvorrichtung 6.2 über die Strangpressprofile herabbewegen. Dann lässt sich die Einspanneinrichtung 7.2 in Richtung Presse 3 bewegen, um ein neues Strangpressprofil 8 unmittelbar von der Presse aufzunehmen.

## Patentansprüche

1. Strangpressanlage mit wenigstens einer Ausziehvorrichtung (6.1, 6.2), insbesondere Puller zum Ausziehen von gepressten Strangpressprofilen (8) entlang einer Transporteinrichtung (1), wobei wenigstens eine Kühleinrichtung (9.1 bis 9.6) zum Kühlen des Strangpressprofils (8) oberhalb der Transporteinrichtung (1) angeordnet ist,
**dadurch gekennzeichnet,**
**dass** bei jeweils einer neben der Transporteinrichtung (1) verfahrbar an einem Führungssystem (5.1, 5.2) gelagerten Auszieheinrichtung (6.1, 6.2) die Kühleinrichtung (9.1 bis 9.6) zwischen den Führungssystemen (5.1, 5.2) angeordnet ist.

2. Strangpressanlage nach Anspruch 1,
**dadurch gekennzeichnet,**
**dass** die Ausziehvorrichtungen (6.1, 6.2) jeweils über der Transporteinrichtung (1) angeordnete Einspanneinrichtungen (7.1, 7.2) aufweisen und durch Verfahren gegen oder entgegen der Transporteinrichtung (1) jeweils überholbar sind, wobei die wenigstens eine Kühleinrichtung (9.1 bis 9.6) oberhalb der Einspanneinrichtungen (7.1, 7.2) vorgesehen ist.

3. Strangpressanlage nach Anspruch 1 oder 2,
**dadurch gekennzeichnet,**
**dass** die Kühleinrichtung (9.1 bis 9.6) sich zumindest teilweise über eine vollständige Länge der Transporteinrichtung (1) erstreckt.

4. Strangpressanlage nach einem der Ansprüche 1 bis 3,
**dadurch gekennzeichnet,**
**dass** ein Gehäuse (12) der Kühleinrichtung (9.1 bis 9.6) von einer Breite ist, die in etwa der Breite (B) der Transporteinrichtung (1) entspricht.

5. Strangpressanlage nach einem der Ansprüche 1 bis 4,
**dadurch gekennzeichnet,**
**dass** in einer Unterseite (11) der Kühleinrichtung (9.1 bis 9.6) eine Mehrzahl von Düsenelementen (10) zum Ausbringen von gekühlter oder kalter Luft vorgesehen ist, wobei die Kühleinrichtung (9.1 bis 9.6) an zumindest eine Luftzuführeinrichtung (15) anschliessbar ist.

6. Strangpressanlage nach einem der Ansprüche 1 bis 5,
**dadurch gekennzeichnet,**
**dass** eine Mehrzahl von Kühleinrichtungen (9.4 bis 9.6) entlang der Transporteinrichtung (1) vorgesehen ist, wobei zwischen einzelnen Kühleinrichtungen (9.4 bis 9.6) jeweils eine Ausnehmung (13) gebildet ist.

7. Strangpressanlage nach Anspruch 5,
**dadurch gekennzeichnet,**
**dass** in der Unterseite (11) der zumindest einen Kühleinrichtung (9.2, 9.3) zumindest eine Ausnehmung (13) vorgesehen ist.

8. Strangpressanlage nach Anspruch 6 oder 7,
**dadurch gekennzeichnet,**
**dass** im Bereich der Ausnehmung (13) die Ausziehvorrichtungen (6.1, 6.2) übereinander zum Überholen ausrichtbar sind.

9. Strangpressanlage nach einem der Ansprüche 6 bis 8,
**dadurch gekennzeichnet,**
**dass** die zumindest eine Ausnehmung (13) als Überhollücke (14) für die Einspanneinrichtungen (7.1, 7.2) ausgebildet ist.

10. Strangpressanlage nach einem der Ansprüche 1 bis 9,
**dadurch gekennzeichnet,**
**dass** die Ausziehvorrichtungen (6.1, 6.2) entlang einer X- und einer Z-Achse hin und her verfahrbar angeordnet sind.

11. Strangpressanlage nach einem der Ansprüche 6 bis 10,,
**dadurch gekennzeichnet,**
**dass** die zumindest eine Ausnehmung (13) im ersten Drittel, unmittelbar nach einer Presse (3) in der Kühleinrichtung (9.2, 9.3) vorgesehen ist und der anschließende Teil der Kühleinrichtung (9.2, 9.3) in etwa zwei Drittel der Länge der Transporteinrichtung (1) entspricht.

## Claims

1. An extruder having at least one extraction device (6.1, 6.2), particularly a puller, for extracting extruded extrusion profiles (8) along a transporting means (1), at least one cooling device (9.1 to 9.6) being disposed above the transporting means (1) for cooling the extrusion profile (8),
**characterised in that**
the cooling device (9.1 to 9.6) is situated between the guidance systems (5.1, 5.2) for each extraction device (6.1, 6.2), each of which extraction devices is situated movably on a guidance system (5.1, 5.2) beside the transporting means (1).

2. The extruder as recited in claim 1,
**characterised in that**
the extraction devices (6.1, 6.2) are each equipped with a clamping device (7.1, 7.2) located above the transporting means (1) and each may be passed by moving against or towards the transporting means (1), the at least one cooling device (9.1 to 9.6) being provided above the clamping devices (7.1, 7.2).

3. The extruder as recited in either of claims 1 or 2,
**characterised in that**
the cooling device (9.1 to 9.6) extends over at least part of the entire length of the transporting means (1) .

4. The extruder as recited in any of claims 1 to 3,
**characterised in that**
a housing (12) of the cooling device (9.1 to 9.6) has a width that approximately matches the width (B) of the transporting means (1).

5. The extruder as recited in any of claims 1 to 4,
**characterised in that**
a plurality of nozzle elements (1) is provided in the underside (11) of the cooling device (9.1 to 9.6) for discharging cooled or cold air, the cooling device (9.1 to 9.6) being connectable to at least one air supply device (15).

6. The extruder as recited in any of claims 1 to 5,
**characterised in that**
a plurality of cooling devices (9.4 to 9.6) is provided along the length of the transporting means (1), wherein one recess (13) is constructed between each of the individual cooling devices (9.4 to 9.6).

7. The extruder as recited in claim 5,
**characterised in that**
at least one recess (13) is provided in the underside (11) of the at least one cooling device (9.2, 9.3).

8. The extruder as recited in either of claims 6 or 7,
**characterised in that**
the extraction devices (6.1, 6.2) can be aligned one above the other in the area of the recess (13) so that they are able to pass.

9. The extruder as recited in any of claims 6 to 8,
**characterised in that**
the at least one recess (13) is constructed as a passing gap (14) for the clamping devices (7.1, 7.2).

10. The extruder as recited in any of claims 1 to 9,
**characterised in that**
the extraction devices (6.1, 6.2) are disposed so as to be movable back and forth along an X and a Z axis.

11. The extruder as recited in any of claims 6 to 10,
**characterised in that**
the at least one recess (13) is provided in the first third in the cooling device (9.2, 9.3) directly after an extrusion press (3), and the following part of the cooling device (9.2, 9.3) is approximately equivalent to two-thirds of the length of the transporting means (1) .

## Revendications

1. Système d'extrusion avec au moins un dispositif d'extraction (6.1, 6.2), notamment tireuse pour extraire des profilés extrudés (8) le long d'un dispositif de transport (1), au moins un dispositif de refroidissement (9.1 à 9.6) étant disposé au dessus du dispositif de transport (1), pour le refroidissement du profilé extrudé (8),
**caractérisé en ce que** sur au moins un dispositif d'extraction (6.1, 6.2) logé à côté du dispositif de transport (1) de façon déplaçable sur un système de guidage (5.1, 5.2), le dispositif de refroidissement (9.1 à 9.6) est disposé entre les dispositifs de guidage (5.1, 5.2)

2. Système d'extrusion selon la revendication 1,
**caractérisé en ce que** les dispositifs d'extraction (6.1, 6.2) comportent chacun des dispositifs de serrage (7.1, 7.2) disposés au dessus du dispositif de transport (1) et sont susceptibles d'être rattrapés chacun, par déplacement à l'encontre ou à l'opposée du dispositif de transport (1), le au moins un dispositif de refroidissement (9.1 à 9.6) étant prévu au-dessus des dispositifs de serrage (7.1, 7.2).

3. Système d'extrusion selon la revendication 1 ou 2,
**caractérisé en ce que** le dispositif de refroidissement (9.1 à 9.6) s'étend au moins partiellement sur une longueur totale du dispositif de transport (1).

4. Système d'extrusion selon l'une quelconque des revendications 1 à 3, **caractérisé en ce que**, un carter (12) du dispositif de refroidissement (9.1 à 9.6) est d'une largeur correspondant environ à la largeur (B) du dispositif de transport (1).

5. Système d'extrusion selon l'une quelconque des revendications 1 à 4,
**caractérisé en ce que**, dans une face inférieure (11) du dispositif de refroidissement (9.1 à 9.6) est prévue une pluralité d'éléments à buses (10) pour produire de l'air refroidi ou froid, le dispositif de refroidissement (9.1 à 9.6) étant susceptible de se raccorder sur au moins un dispositif d'alimentation d'air (15).

6. Système d'extrusion selon l'une quelconque des revendications 1 à 6,
**caractérisé en ce que**, une pluralité de dispositifs de refroidissement (9.4 à 9.6) est prévue le long du dispositif de transport (1), un évidement (13) étant formé chaque fois entre des dispositifs de refroidissement individuels (9.4 à 9.6).

7. Système d'extrusion selon la revendication 5,
**caractérisé en ce que** dans la face inférieure (11) du au moins un dispositif de refroidissement (9.2, 9.3) est prévu au moins un évidement (13).

8. Système d'extrusion selon la revendication 6 ou 7,
**caractérisé en ce que** dans la région de l'évidement (13), les dispositifs d'extraction (6.1, 6.2) sont susceptibles d'être orientés les uns au dessus des autres, pour le rattrapage.

9. Système d'extrusion selon l'une quelconque des revendications 6 à 8,
**caractérisé en ce que** le au moins un évidement (13) est conçu sous la forme d'un interstice de rattrapage (14) pour les dispositifs de serrage (7.1, 7.2).

10. Système d'extrusion selon l'une quelconque des revendications 1 à 9,
**caractérisé en ce que** les dispositifs d'extraction (6.1, 6.2) sont disposés de façon à être déplaçables de part et d'autre, le long d'un axe X et d'un axe Z.

11. Système d'extrusion selon l'une quelconque des revendications 6 à 10,
**caractérisé en ce que** le au moins un évidement (13) est prévu dans le premier tiers, directement en aval d'une presse (3), dans le dispositif de refroidissement (9.2, 9.3) et **en ce que** la partie consécutive du dispositif de refroidissement (9.2, 9.3) correspond à environ les deux tiers de la longueur du dispositif de transport (1).
